# EUROPÄISCHE PATENTSCHRIFT

(11) **EP 1 265 944 B1**
(45) Veröffentlichungstag und Bekanntmachung des Hinweises auf die Patenterteilung: **02.05.2007**
(21) Anmeldenummer: 01901204.6
(22) Anmeldetag: 25.01.2001
(51) Int. Cl.: C08G 64/40, B01D 3/06

(54) **VERFAHREN ZUR HERSTELLUNG VON HOCHREINEM POLYCARBONAT**
METHOD FOR THE PRODUCTION OF HIGHLY PURE POLYCARBONATE
PROCEDE DE FABRICATION DE POLYCARBONATE ULTRA PUR

(30) Priorität: 07.02.2000 DE 10005151
(43) Veröffentlichungstag der Anmeldung: 18.12.2002
(73) Patentinhaber: Bayer MaterialScience AG, 51368 Leverkusen (DE)
(72) Erfinder: ELSNER, Thomas, 40593 Düsseldorf (DE); HEUSER, Jürgen, 47803 Krefeld (DE); KORDS, Christian, 47829 Krefeld (DE)
(86) Internationale Anmeldenummer: PCT/EP2001/000808
(87) Internationale Veröffentlichungsnummer: WO 2001/058984

(56) Entgegenhaltungen:
- WO-A-00/07684
- WO-A-99/67002

## Beschreibung

Die Erfindung betrifft ein Verfahren zur Herstellung von hochreinem Polycarbonat.

Zur Herstellung von Polycarbonaten nach dem sogenannten Phasengrenzflächenverfahren werden Dihydroxydiarylalkane in Form ihrer Alkalisalze mit Phosgen in heterogener Phase in Gegenwart von anorganischen Basen wie Natronlauge und einem organischen Lösungsmittel, in dem das Produkt Polycarbonat gut löslich ist, umgesetzt. Während der Reaktion ist die wässrige Phase in der organischen Phase verteilt und nach der Reaktion wird die organische, Polycarbonat enthaltende Phase mit einer wässrigen Flüssigkeit gewaschen, wobei unter anderem Elektrolyte entfernt werden sollen, und die Waschflüssigkeit anschließend abgetrennt.

Formkörper aus Polycarbonaten mit hoher Reinheit werden für optische und magnetooptische Zwecke, insbesondere in laserlesbaren Datenspeichermedien, eingesetzt. Da die Speicherkapazität dieser Medien immer weiter erhöht werden soll, steigen auch die Anforderungen an die Reinheit der eingesetzten Polycarbonate.

Der Erfindung liegt die Aufgabe zugrunde, ein Verfahren zur Entfernung von flüchtigen Komponenten aus einer Polymerlösung zur Verfügung zu stellen, um ein hochreines, besonders partikelarmes Polycarbonat zu erzeugen, das sich besonders gut als Ausgangsstoffe für Formkörper zur Datenspeicherung eignet.

Diese Aufgabe konnte mit der Ausarbeitung und Bereitstellung des nachstehend näher beschriebenen erfindungsgemäßen Verfahrens gelöst werden.

Gegenstand der Erfindung ist zunächst ein Verfahren zur Herstellung von Polycarbonat nach dem Phasengrenzflächenverfahren, in dem die Polycarbonat enthaltende Lösung mit einer wässrigen Waschflüssigkeit gewaschen, die Waschflüssigkeit abgetrennt und das Lösungsmittel abgedampft wird und bei dem das nach dem Abtrennen der Waschflüssigkeit erhaltene Gemisch aus organischer Polycarbonat-Lösung und restlicher Waschflüssigkeit bis zum Erreichen einer klaren Lösung durch indirekten Wärmeaustausch erwärmt und zum Abtrennen von Feststoffen filtriert wird, bei dem
A) in einer ersten Stufe, in einem oder mehreren einzelnen Schritten wird die Lösung mit einem Polymeranteil von 5 bis 20 Gew.-% in einer Kombination aus einem Rohrbündelwärmetauscher und einem Dünnschichtverdampfer oder einem Schlangenrohrverdampfer oder in einem Rohrbündelwärmetauscher jeweils mit nachgeschaltetem Abscheider bei einer Temperatur von 150 bis 250°C auf 60 bis 75 Gew.-% aufkonzentriert, wobei der Druck im Abscheider etwa 0,1 bis 0,4 MPa beträgt, bevorzugt Umgebungsdruck (d.h. etwa 0,1 MPa),
B) in einer weiteren Stufe wird die Lösung in einem Rohrbündelwärmetauscher mit nachgeschaltetem Abscheider bei einer Temperatur von 250 bis 350°C von 60 bis 75 Gew.-% auf mindestens 95 Gew.-%, insbesondere auf 98 bis 99,9 Gew.-% aufkonzentriert, wobei der Rohrbündelwärmetauscher vertikale, beheizte gerade Rohre mit oder ohne eingebaute statische Mischer mit einem inneren Durchmesser von 5 bis 30 mm, vorzugsweise von 5 bis 15 mm, einer Länge von 0,5 bis 4 m, bevorzugt von 1 bis 2 m aufweist und der Durchsatz je Wärmetauscherrohr durch die Rohre 0,5 bis 10 kg/h, bevorzugt 3 bis 7 kg/h beträgt, bezogen auf das Polymer und wobei der Druck im Abscheider 0,5 kPa bis 0,1 MPa, insbesondere 3 kPa bis 0,1 kPa, bevorzugt 3 kPa bis 10 kPa beträgt,
C) in einer weiteren Stufe wird die Reste von Lösungsmittel und/oder anderen flüchtigen Komponenten enthaltende Lösung in einem weiteren Rohrbündelwärmetauscher mit nachgeschaltetem Abscheider oder in einem Strangverdampfer bei einer Temperatur von 250 bis 350°C auf einen Gehalt an Lösungsmittel und/oder anderen flüchtigen Komponenten von 5 bis 500 ppm aufkonzentriert, wobei der Rohrbündelwärmetauscher vertikale, beheizte gerade Rohre mit einem inneren Durchmesser von 5 bis 30 mm, vorzugsweise von 10 bis 20 mm, einer Länge von 0,2 bis 2 m, bevorzugt von 0,5 bis 1 m aufweist und der Durchsatz je Wärmetauscherrohr durch die Rohre 0,5 bis 10 kg/h, bevorzugt 3 bis 7 kg/h beträgt, bezogen auf das Polymer und wobei der Druck im Abscheider 0,05 kPa bis 0,1 MPa, bevorzugt 0,1 kPa bis 2 kPa beträgt, und
D) das entgaste Polymer wird anschließend isoliert und ggf. granuliert.

Erfindungsgemäß sollen unter dem Begriff "Polymer" Polycarbonate fallen und zwar sowohl Homopolycarbonate als auch Copolycarbonate und deren Gemische. Die erfindungsgemäßen Polycarbonate können aromatische Polyestercarbonate sein oder Polycarbonate, die im Gemisch mit aromatischen Polyestercarbonaten vorliegen. Der Begriff Polycarbonat wird anschließend stellvertretend für die zuvor genannten Polymere verwendet.

Das Polycarbonat wird nach dem sogenannten Phasengrenzflächenverfahren erhalten (H.Schnell "Chemistry and Physics of Polycarbonates", Polymerreview, Vol.IXS. 22ff, Interscience Publishers, New York 1964), in dem die Polycarbonat enthaltende Lösung anschließend mit einer Waschflüssigkeit gewaschen, die Waschflüssigkeit abgetrennt und das Lösungsmittel abgedampft wird. Erfindungsgemäß wird dieses Verfahren in den beschriebenen Stufen durchgeführt.

Erfindungsgemäß als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Inganbisphenole, Bis(hydroxyphenyl)ether, Bis(hydroxyphenyl)sulfone, Bis(hydroxyphenyl)ketone und a,a'-Bis(hydroxyphenyl)diisopropylbenzole gehören.

Besonders bevorzugte Bisphenole, die zu den vorgenannten Verbindungsgruppen gehören, sind 2,2-Bis-(4-hydroxyphenyl)-propan(Bisphenol-A), Tetraalkylbisphenol-A, 4,4-(meta-Phenylendiisopropyl)diphenol(Bisphenol M), 1,1-Bis-(4-hydroxyphenyl)-3,3,5-trimethylcyclohexanon sowie ggf. deren Gemische. Besonders bevorzugte Copolycarbonate sind solche auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen, umgesetzt.

Die Polyestercarbonate werden durch Umsetzung der bereits genannten Bisphenole, mindestens einer aromatischen Dicarbonsäure und ggf. Kohlensäure erhalten. Geeignete aromatische Dicarbonsäure sind beispielsweise Orthophtalsäure, Terephthalsäure, Isophthalsäure, 3,3'- oder 4,4'-Diphenyldicarbonsäure und Benzophenondicarbonsäuren.

In dem Verfahren verwendete inerte organische Lösungsmittel sind bevorzugt Dichlormethan oder Gemische aus Dichlormethan und Chlorbenzol.

Die Reaktion kann durch Katalysatoren, wie tertiäre Amine, N-Alkylpiperidine oder Oniumsalze beschleunigt werden. Bevorzugt werden Tributylamin, Triethylamin und N-Ethylpiperidin verwendet. Als Kettenabbruchmittel und Molmassenregler können ein monofunktionelles Phenol, wie Phenol, Cumylphenol, p.-tert.-Butylphenol oder 4-(1,1,3,3-Tetramethylbutyl)phenol verwendet werden. Als Verzweiger kann beispielsweise Isatinbiscresol eingesetzt werden.

Zur Herstellung der hochreinen Polycarbonate werden die Bisphenole in wässriger alkalischer Phase, vorzugsweise Natronlauge, gelöst. Die gegebenenfalls zur Herstellung von Copolycarbonaten erforderlichen Kettenabbrecher werden in Mengen von 1,0 bis 20,0 Mol % je Mol Bisphenol, in der wässrigen alkalischen Phase gelöst oder zu dieser in einer inerten organischen Phase in Substanz zugegeben. Anschließend wird Phosgen in den die übrigen Reaktionsbestandteile enthaltenden Mischer eingeleitet und die Polymerisation durchgeführt.

Ein Teil, bis zu 80 Mol %, vorzugsweise von 20 bis 50 Mol % der Carbonat-Gruppen in den Polycarbonaten können durch aromatische Dicarbonsäureester-Gruppen ersetzt sein.

Ein Teil, bis zu 80 Mol %, vorzugsweise von 20 bis 50 Mol % der Carbonat-Gruppen in den Polycarbonaten können durch aromtaische Dicarbonsäureester-Gruppen ersetzt sein.

In weiterer Ausgestaltung der Erfindung haben die thermoplastischen Polycarbonate mittlere Molekulargewichte M_{w} und einem Fremdteilchenindex von weniger als 2,5•10⁴ µm²/g. Bevorzugt ist der Natriumgehalt kleiner als 30 ppb, gemessen durch Atomsorptionspektroskopie.

Während der Reaktion wird die wässrige Phase in der organischen Phase emulgiert. Dabei entstehen Tröpfchen unterschiedlicher Größe. Nach der Reaktion wird die organische, das Polycarbonat enthaltende Phase, üblicherweise mehrmals mit einer wässrigen Flüssigkeit gewaschen und nach jedem Waschvorgang von der wässrigen Phase soweit wie möglich getrennt. Die Polymerlösung ist nach der Wäsche und Abtrennung der Waschflüssigkeit trüb. Als Waschflüssigkeit werden wässrige Flüssigkeit zur Abtrennung des Katalysators, eine verdünnte Mineralsäure wie HCl oder H₃PO₄ und zur weiteren Reinigung vollentsalztes Wasser eingesetzt. Die Konzentration von HCI oder H₃PO₄ in der Waschflüssigkeit kann beispielsweise 0,5 bis 1,0 Gew.-% betragen.

Als Phasentrennvorrichtungen zur Abtrennung der Waschflüssigkeit von der organischen Phase können grundsätzlich bekannte Trenngefäße, Phasenseparatoren, Zentrifugen oder Coalescer oder auch Kombinationen dieser Einrichtungen verwendet werden.

Zum Erhalt des hochreinen Polycarbonats wird das Lösungsmittel in den beschriebenen Stufen abgedampft.

Die folgenden Beispiele dienen der Erläuterung des erfindungsgemäßen Verfahrens.

### Beispiel 1

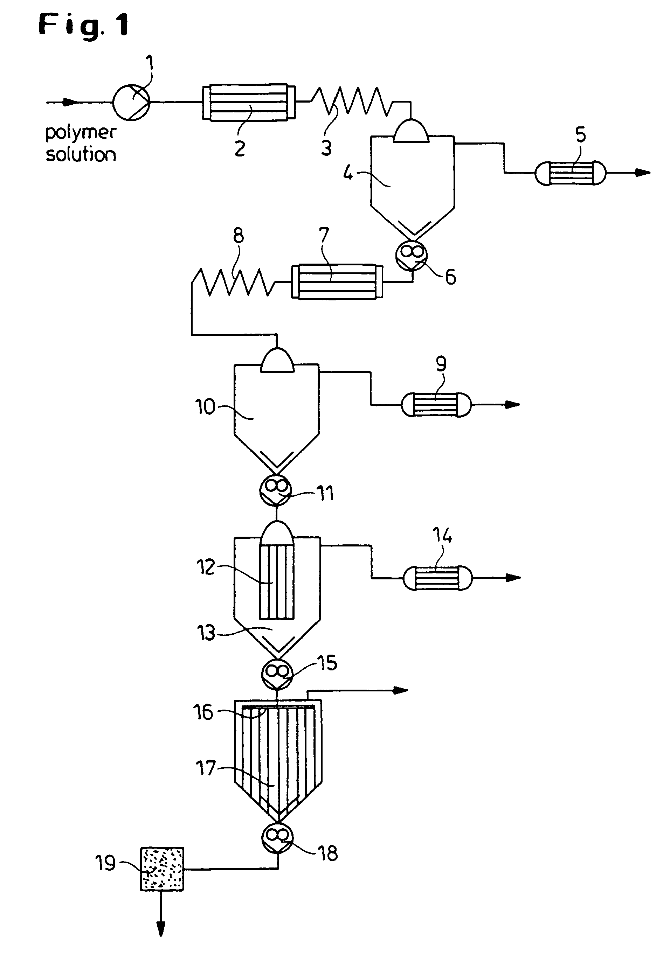

Das Verfahren wird am Verfahrensschema nach Fig. 1 allgemein beispielhaft dargestellt. Eine Pumpe 1, bevorzugt eine Schraubenspindelpumpe, fördert die 5 bis 20 %ige Polymerlösung in zwei Stufen durch eine Kombination aus Wärmetauscher 2 und Schlangenrohrverdampfer 3 in den Sumpf eines ersten Abscheiders 4. Im Abscheider 4 werden die leichter flüchtigen Komponenten abgetrennt und in einem Kondensator 5 kondensiert. Eine weitere Pumpe, bevorzugt Zahnradpumpe 6 fördert die Lösung durch einen zweiten Wärmetauscher 7 gefolgt von einem zweiten Schlangenrohrverdampfer 8 unter Abscheidung der flüchtigen Komponenten im Kondensator 9 in den Abscheider 10.

Eine weitere Zahnradpumpe 11 fördert die aufkonzentrierte Polymerlösung (60 bis 75 Gew.-% Polymer) durch einen Rohrbündelwärmetauscher 12 in den Sumpf des dritten Abscheiders 13. Die leichter flüchtigen Komponenten werden im Kondensator 14 kondensiert. Eine weitere Zahnradpumpe 15 fördert die 95 bis 99,9 Gew.-%ige Polymerlösung durch einen Rohrverteiler 16, der eine Vielzahl dünner Polymer-Stränge von 1 mm Durchmesser erzeugt, in den vierten Abscheider 17. Hier werden die leichterflüchtigen Komponenten abgesaugt. Die entgaste Polymerschmelze wird über eine Zahnradpumpe 18 einer Granuliereinrichtung 19 zugeführt.

Es wurde eine 15 Gew.-%ige Polycarbonatlösung erhalten aus einem Polycarbonatherstellungsverfahren unter Verwendung von BPA als Polymeren mit 42 Gew.-% Chlorbenzol und 43 Gew.-% Methylenchlorid in vier Schritten (entsprechend Fig. 1) mittels der oben beschriebenen Verfahrensführung aufkonzentriert. Die Polycarbonatlösung wurde in den ersten zwei Stufen in den Wärmetauschern 2 und 7 auf 170 bzw. 220°C erhitzt. Die Rohre der Wärmetauscher 2, 7 wiesen einen Durchmesser von 10 mm auf und waren 4 m lang sowie aus Alloy 59 (Wärmetauscher 2) bzw. Incolloy 686 (Wärmetauscher 7) gefertigt. Der Druck im zugehörigen Abscheider 4 lag bei 0,14 MPa und im Abscheider 22 bei 0,35 MPa. Die aus dem Abscheider 10 austretende Polymerlösung hatte einen Anteil von 65 Gew.-% Polycarbonat.

Die Polycarbonatlösung wurde in der dritten Stufe im Rohrbündelwärmetauscher 4 auf 300°C erhitzt. Die Rohre wiesen einen Durchmesser von 10 mm auf und waren 2 m lang sowie aus Alloy 59 gefertigt. Der Durchsatz je Rohr betrug 5 kg/h. Der Druck im zugehörigen Abscheider 13 lag bei 0,1 MPa. Die aus dem zweiten Abscheider 13 austretende Polymerlösung hatte einen Anteil von 98,5 Gew.-% Polycarbonat.

Die Polycarbonatlösung wurde in der vierten Stufe über einen Rohrverteiler 16 mit 1 mm-Bohrungen zur Erzeugung einer Vielzahl von Polymer-Strängen mit hoher Stoffaustauschfläche in den Abscheider 17 eingelassen. Die produktberührten Rohrleitungen und der Abscheider 17 waren aus Alloy 59 gefertigt. Der Druck im vierten Abscheider 17 betrug 0,1 kPa.

Das aus dem vierten Abscheider 17 austretende entgaste Polycarbonat der Polymerschmelze wies einen Gehalt an flüchtigen Verbindungen und Restlösungsmittel (im wesentlichen Chlorbenzol) von 50 ppm auf.

Nach dem Austritt aus dem vierten Abscheider 17 wurde die Polycarbonatschmelze in einer Granuliereinrichtung 19 direkt zu Granulat verarbeitet. Das Polycarbonatgranulat hatte eine Löungsviskosität ηᵣₑₗ von 1,29 (gemessen bei 25°C in Methylenchlorid bei einer Konzentration von 5 g/l).

Der Restgehalt an Bisphenol-A (BPA) im granulierten Polycarbonat betrug ca. 5 ppm, gemessen über Gaschromatographie.

### Beispiel 2

Es wurde die gleiche Verfahrensfolge und Vorrichtung wie in Beispiel 1 verwendet. Jedoch wurde der Druck im Abscheider 13 auf 5 kPa gesenkt.

Mit dieser Maßgabe wurde aus dem Gesamtverfahren im Polycarbonatgranulat mit einem Restgehalt an BPA von nur noch 2 ppm erhalten. Der Chlorbenzolgehalt betrug 50 ppm.

### Beispiel 3

Mit der gleichen Verfahrensführung wie in Beispiel 2, jedoch einem Druck von 3 kPa im Abscheider 13 wurde ein Polycarbonat mit einem Restgehalt an BPA von 1 ppm erhalten. Der Chlorbenzolgehalt betrug 25 ppm.

## Patentansprüche

1. Verfahren zur Herstellung von Polycarbonat nach dem Phasengrenzflächenverfahren, in dem die Polycarbonat enthaltende Lösung mit einer wässrigen Waschflüssigkeit gewaschen, die Waschflüssigkeit abgetrennt und das Lösungsmittel abgedampft wird und bei dem das nach dem Abtrennen der Waschflüssigkeit erhaltene Gemisch aus organischer Polycarbonat-Lösung und restlicher Waschflüssigkeit bis zum Erreichen einer klaren Lösung durch indirekten Wärmeaustausch erwärmt und zum Abtrennen von Feststoffen filtriert wird, **dadurch gekennzeichnet** durch die folgenden Schritte
A) in einer ersten Stufe, in einem oder mehreren einzelnen Schritten wird die Lösung mit einem Polymeranteil von 5 bis 20 Gew.-% in einer Kombination aus einem Rohrbündelwärmetauscher und einem Dünnschichtverdampfer oder einem Schlangenrohrverdampfer oder in einem Rohrbündelwärmetauscher jeweils mit nachgeschaltetem Abscheider bei einer Temperatur von 150 bis 250°C auf 60 bis 75 Gew.-% aufkonzentriert, wobei der Druck im Abscheider etwa 0,1 bis 0,4 MPa beträgt, bevorzugt Umgebungsdruck (d.h. etwa 0,1 MPa),
B) in einer weiteren Stufe wird die Lösung in einem Rohrbündelwärmetauscher mit nachgeschaltetem Abscheider bei einer Temperatur von 250 bis 350°C von 60 bis 75 Gew.-% auf mindestens 95 Gew.-%, insbesondere auf 98 bis 99,9 Gew.-% aufkonzentriert, wobei der Rohrbündelwärmetauscher vertikale, beheizte gerade Rohre mit oder ohne eingebaute statische Mischer mit einem inneren Durchmesser von 5 bis 30 mm, vorzugsweise von 5 bis 15 mm, einer Länge von 0,5 bis 4 m, bevorzugt von 1 bis 2 m aufweist und der Durchsatz je Wärmetauscherrohr durch die Rohre 0,5 bis 10 kg/h, bevorzugt 3 bis 7 kg/h beträgt, bezogen auf das Polymer und wobei der Druck im Abscheider 0,5 kPa bis 0,1 MPa, insbesondere 3 kPa bis 0,1 kPa, bevorzugt 3 kPa bis 10 kPa beträgt,
C) in einer weiteren Stufe wird die Reste von Lösungsmittel und/oder anderen flüchtigen Komponenten enthaltende Lösung in einem weiteren Rohrbündelwärmetauscher mit nachgeschaltetem Abscheider oder in einem Strangverdampfer bei einer Temperatur von 250 bis 350°C auf einen Gehalt an Lösungsmittel und/oder anderen flüchtigen Komponenten von 5 bis 500 ppm aufkonzentriert, wobei der Rohrbündelwärmetauscher vertikale, beheizte gerade Rohre mit einem inneren Durchmesser von 5 bis 30 mm, vorzugsweise von 10 bis 20 mm, einer Länge von 0,2 bis 2 m, bevorzugt von 0,5 bis 1 m aufweist und der Durchsatz je Wärmetauscherrohr durch die Rohre 0,5 bis 10 kg/h, bevorzugt 3 bis 7 kg/h beträgt, bezogen auf das Polymer und wobei der Druck im Abscheider 0,05 kPa bis 0,1 MPa, bevorzugt 0,1 kPa bis 2 kPa beträgt, und
D) das entgaste Polymer wird anschließend isoliert und ggf. granuliert.

2. Verfahren nach Anspruch 1, **dadurch gekennzeichnet, dass** das Lösungsmittel Dichlormethan oder ein Gemisch aus Dichlormethan und Chlorbenzol ist.

3. Verfahren nach Anspruch 1 oder 2, **dadurch gekennzeichnet, dass** man die Filtration so ausführt, dass nach der Filtration bei erhöhter Temperatur der Fremdteilchenindex in dem erhaltenen Polycarbonat kleiner als 2,5 • 10⁴ µm²/g, insbesondere kleiner als 1,8 • 10⁴ µm²/g ist.

4. Verfahren nach Anspruch 1 oder 2, **dadurch gekennzeichnet, dass** nach der Filtration bei erhöhter Temperatur der Natriumgehalt weniger als 50 ppb, insbesondere ≤ 30 ppb, beträgt.

5. Verfahren nach einem der Ansprüche 1 bis 4, **dadurch gekennzeichnet, dass** man das erhaltene Polycarbonat zu einem Formkörper verarbeitet.

## Claims

1. Process for producing polycarbonate by the phase interface process, in which the polycarbonate-containing solution is washed with an aqueous washing liquid, the washing liquid is separated off and the solvent is evaporated off and wherein the mixture of organic polycarbonate solution and residual washing liquid obtained after the separation of the washing liquid is heated by indirect heat exchange until a clear solution is attained and filtered in order to remove solid substances,
**characterised by** the following steps:
A) in an initial stage, in one or more individual steps, the solution, which has a polymer content of 5 to 20 wt.%, is concentrated to 60 to 75 wt.% at a temperature of 150°C to 250°C in a combination of a shell-and-tube heat exchanger and a film evaporator or a coiled-tube evaporator or in a shell-and-tube heat exchanger, in each case with downstream separator, the pressure in the separator being about 0.1 to 0.4 MPa, preferably ambient pressure (i.e. about 0.1 MPa),
B) in a further stage, the solution is concentrated from 60 to 75 wt.% to at least 95 wt.%, in particular to 98 to 99.9 wt.%, at a temperature of 250°C to 350°C, in a shell-and-tube heat exchanger with downstream separator, the shell-and-tube heat exchanger containing vertical, heated, straight tubes with or without incorporated static mixers, having an internal diameter of 5 to 30 mm, preferably of 5 to 15 mm, a length of 0.5 to 4 m, preferably of 1 to 2 m, and the throughput per heat-exchanger tube through the tubes being 0.5 to 10 kg/h, preferably 3 to 7 kg/h, based on the polymer, and the pressure in the separator being 0.5 kPa to 0.1 MPa, in particular 3 kPa to 0.1 kPa, preferably 3 kPa to 10 kPa,
C) in a further stage, the solution containing remains of solvent and/or of other volatile components is concentrated to a content of solvent and/or of other volatile components of 5 to 500 ppm, at a temperature of 250°C to 350°C, in a further shell-and-tube heat exchanger with downstream separator or in an extruder-evaporator, the shell-and-tube heat exchanger containing vertical, heated, straight tubes having an internal diameter of 5 to 30 mm, preferably of 10 to 20 mm, a length of 0.2 to 2 m, preferably of 0.5 to 1 m, and the throughput per heat-exchanger tube through the tubes being 0.5 to 10 kg/h, preferably 3 to 7 kg/h, based on the polymer, and the pressure in the separator being 0.05 kPa to 0.1 MPa, preferably 0.1 kPa to 2 kPa, and
D) the degassed polymer is subsequently isolated and optionally granulated.

2. Process according to claim 1, **characterised in that** the solvent is dichloromethane or a mixture of dichloromethane and chlorobenzene.

3. Process according to claim 1 or 2, **characterised in that** the filtration is carried out in such a manner that after the filtration at elevated temperature, the foreign particle index in the polycarbonate obtained is less than 2.5 · 10⁴ µm²/g, in particular less than 1.8 · 10⁴ µm²/g.

4. Process according to claim 1 or 2, **characterised in that** after the filtration at elevated temperature, the sodium content is less than 50 ppb, in particular ≤ 30 ppb.

5. Process according to any one of claims 1 to 4, **characterised in that** the polycarbonate obtained is processed to form a moulded product.

## Revendications

1. Procédé de préparation de polycarbonate selon le procédé interfacial, dans lequel la solution contenant le polycarbonate est lavée avec un liquide de lavage aqueux, la liquide de lavage est séparé et le solvant est évaporé, et dans lequel le mélange obtenu après la séparation du liquide de lavage, constitué de la solution organique du polycarbonate et du liquide de lavage résiduel, est chauffé jusqu'à obtenir une solution limpide par échange de chaleur indirect et filtré pour la séparation des matières solides, **caractérisé par** les stades suivants :
A) dans un premier stade, en une ou plusieurs étapes individuelles, la solution avec une quantité de polymère de 5 à 20% en poids, est concentrée jusqu'à 60 à 75% en poids, par une combinaison d'un échangeur de chaleur à faisceau tubulaire et d'un évaporateur à couche mince ou d'un évaporateur à serpentin ou dans un échangeur de chaleur à faisceau tubulaire chaque fois avec séparateur intercalé à la suite, à une température de 150 à 250°C, où la pression dans le séparateur est d'environ 0,1 à 0,4 MPa, de préférence la pression ambiante (à savoir, environ 0,1 MPa),
B) dans un autre stade, la solution est concentrée de 60 à 75% en poids, jusqu'à au moins 95% en poids, en particulier 98 à 99,9% en poids, dans un échangeur de chaleur à faisceau tubulaire avec séparateur intercalé à la suite, à une température de 250 à 350°C, où l'échangeur de chaleur à faisceau tubulaire présente des tubes verticaux, droits, chauffés avec ou sans mélangeur statique incorporé, ayant un diamètre interne de 5 à 30 mm, de préférence de 5 à 15 mm, une longueur de 0,5 à 4 m, de préférence de 1 à 2 m et la charge par tube d'échange de chaleur se situe dans l'intervalle allant de 0,5 à 10 kg/h, de préférence de 3 à 7 kg/h par le tube, par rapport au polymère et où la pression dans le séparateur est d'environ 0,5 kPa à 0,1 MPa, en particulier de 3 kPa à 0,1 MPa, de préférence de 3 kPa à 10 kPa,
C) dans un autre stade, le reste de solution contenant le solvant et/ou d'autres composants volatils est concentré dans un autre échangeur de chaleur à faisceau tubulaire avec séparateur intercalé à la suite ou dans un évaporateur à tube à une température de 250 à 350°C, jusqu'à une teneur en solvant et/ou autres composants volatils allant de 5 à 500 ppm, où l'échangeur de chaleur à faisceau tubulaire présente des tubes verticaux, droits, chauffés ayant un diamètre interne de 5 à 30 mm, de préférence de 10 à 20 mm, une longueur de 0,2 à 2 m, de préférence de 0,5 à 1 m et la charge par tube d'échange de chaleur se situe dans l'intervalle allant de 0,5 à 10 kg/h, de préférence de 3 à 7 kg/h par le tube, par rapport au polymère et où la pression dans le séparateur est d'environ 0,05 kPa à 0,1 MPa, de préférence de 0,1 kPa à 2 kPa, et
D) le polymère dégazé est ensuite isolé et le cas échéant, granulé.

2. Procédé selon la revendication 1, **caractérisé en ce que** le solvant est le dichlorométhane ou un mélange de dichlorométhane et de chlorobenzène.

3. Procédé selon la revendication 1 ou 2, **caractérisé en ce que** l'on réalise la filtration de sorte qu'après la filtration à température élevée, l'indice de particules étrangères dans le polycarbonate obtenu est inférieur à 2,5 . 10⁴ µm²/g, en particulier inférieur à 1,8 . 10⁴ µm²/g.

4. Procédé selon la revendication 1 ou 2, **caractérisé en ce qu'**après la filtration à température élevée, la teneur en sodium est inférieure à 50 ppb, en particulier ≤ 30 ppb.

5. Procédé selon l'une des revendications 1 à 4, **caractérisé en ce que** l'on façonne le polycarbonate obtenu en un corps moulé.
